# EUROPEAN PATENT APPLICATION

(11) **EP 0 545 633 A1**
(43) Date of publication of application: **09.06.1993**
(21) Application number: 92310816.1
(22) Date of filing: 26.11.1992
(51) Int. Cl.: H02J 7/10

(54) **Improvements in battery charging**

(30) Priority: 29.11.1991 GB 9125446
(71) Applicant: SHAYE COMMUNICATIONS LIMITED, Winchester, Hampshire SO23 7BH (GB)
(72) Inventor: Sladen, Peter John, c/o Shaye Communications Ltd., Winchester, Hampshire SO23 7BH (GB)
(74) Representative: Boydell, John Christopher

(57) **Abstract**

Portable equipment (3) incorporating electronic circuitry including, for example, a microprocessor 6 is powered by a battery pack 4 which is charged via leads 14 and 15 from an external charger (not shown) incorporating a controllable current source 11. As well as carrying out its normal functions within the equipment, the microprocessor 6 monitors the battery voltage on a lead 9 and analyses this information to control the current source 11 via an output 10 and lead 16. In this way, sophisticated control of the charging current can be achieved by using already-existing circuitry within the portable equipment.

## Description

This invention relates to battery charging and is particularly concerned with the charging of batteries within portable equipment.

Much portable equipment contains a power source comprising one or more rechargeable batteries, for example NICADs. The batteries may be recharged by removing them and charging them up using a separate charger; however, the present invention is concerned with equipment of the type in which the batteries are intended for in-situ charging. Such equipment is often, but not always, provided with a dedicated charger and may indeed be semi-permanently connected to the charger, except when in use.

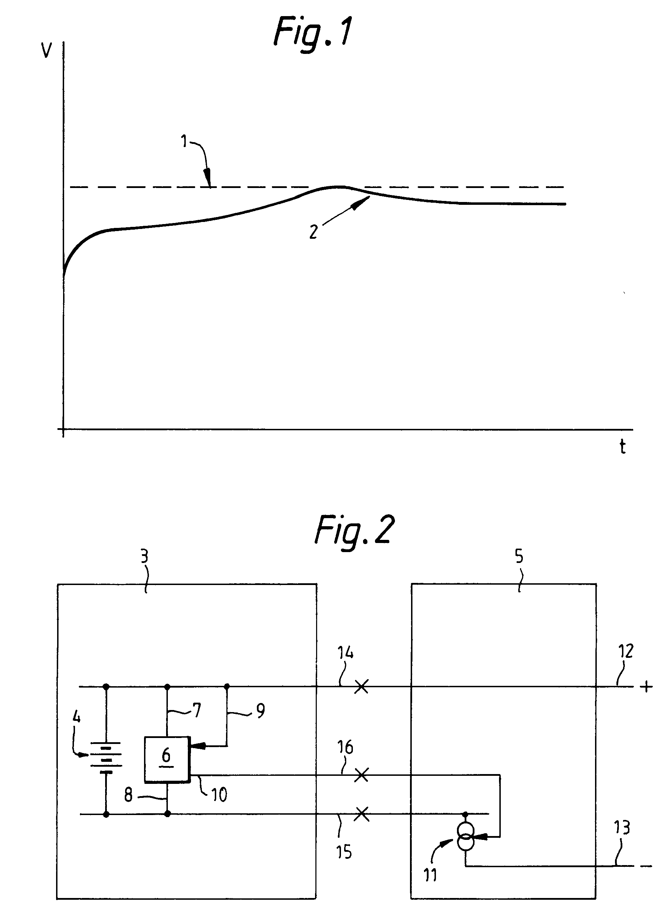

A typical graph illustrating the charging of a NICAD battery pack is presented in Figure 1 of the accompanying drawings. The dotted line 1 represents full charge. As can be seen, shortly after full charge is attained the curve enters a negative region 2, and this negative region can be used as a signal to the charger either to switch from a high rate of charging to a low rate, or to stop charging altogether. Accordingly the normal "intelligent" battery charger will incorporate means for detecting negative dV/dt and will act accordingly. Such detecting means will normally, of course, form part of the charger itself; however, much of the equipment being charged will itself incorporate, as part of its existing circuitry, components which could readily handle these control functions of the charger and this invention accordingly provides that the control functions of the charger are taken over by circuitry within the equipment being charged. To gain the advantages of this, those components within the equipment which are used for such charger control should be pre-existing components, used already perhaps for another purpose or purposes.

As an example, much portable equipment incorporates a microprocessor and associated circuitry which carry out certain functions associated with the purpose of the equipment, under power from a rechargeable battery pack. These pre-existing components can be readily used for controlling the associated battery charger and, by this means, the complexity and cost of the battery charger can be reduced. In addition, the use of relatively sophisticated circuitry, such as might be found in the equipment itself, enables the use of further charging control features which might not be justified on the grounds of expense in a relatively cheap charger for domestic use.

In order to realise the invention, the number of connections between the charger and the equipment is increased from the minimum level of two (i.e. positive and negative charging connections) to three, the third being a control connection for passing control signals from the equipment to the charger. These control signals can be used to control charge rate for example from high rate to low rate as described above, or can be used to switch off charging completely. In addition, depending upon the nature of the components within the equipment, a number of more sophisticated control functions can be achieved, as will be described below.

In order that the invention may be better understood, an embodiment thereof will now be described by way of example only and with reference to the accompanying drawings in which:
Figure 1 is a graph of battery voltage V against time t, illustrating a typical charging curve for a NICAD battery pack;
Figure 2 is a block diagram showing an embodiment of a dedicated charging system according to the invention, comprising equipment with in-situ rechargeable battery pack, and dedicated battery charger; and
Figure 3 is a flow diagram describing a typical algorithm for sophisticated charger control.

Referring to Figure 2, there is shown equipment 3 incorporating a battery pack 4, and a charger 5.

The equipment 3 comprises any portable equipment incorporating electronic circuits powered by a rechargeable battery or battery pack, for example a NICAD battery pack. Typically the equipment might comprise the handset of a cordless telephone system. Such handsets will almost inevitably incorporate a microprocessor 6 which can be used, as well as to carry out its existing functions, to control the charger, as will be explained. Power to the microprocessor is applied via leads 7 and 8 in the conventional manner. The remaining normal circuitry connections to the microprocessor are not shown; however, for the purpose of charging control, the microprocessor has a battery voltage monitoring input 9, and a charger control output 10.

The charger 5 comprises a controllable current source 11 which is placed in series in one of the power supply leads 12,13 to the charger. These latter can be taken from a conventional power supply unit (not shown), as used in battery chargers, which comprise means for reducing the mains voltage to a suitable level, and for converting the AC to a smoothed, and possibly regulated, DC. Alternatively the circuitry for the power supply unit, as well as the charger 5, can be housed in a single housing, connected by positive and negative supply leads 14,15 and control lead 16, to the equipment 3. The leads 14 to 16 are, of course, breakable since the equipment 1 is portable and must therefore be physically separable from the associated charger, and this fact is represented by the cross marks "X" in each of the leads. The circuitry of charger 5 could be incorporated in the equipment 3, in which case the breakable connections would be in leads 12 and 13.

In use, the microprocessor monitors the battery voltage via lead 9, and sends appropriate control signals via lead 10,16 to the current source 11. Thus using, for example the dV/dt technique to detect the negative region 2, the charger 5 can be switched from a high charge rate to a low charge rate and/or switched off entirely when charging is judged to be complete.

However, the use of the microprocessor 6 enables the use of much more sophisticated charging control. During normal use of a telephone handset, it (the handset) is stored on the charger, and charged thereby, for most of the time, and is only removed from the charger in order to make or receive a call. For example, occasional handset use, say 10 times a day for 15 minutes each time, equates to a fully charged battery being discharged by about 5% of its full capacity and immediately recharged again. This happens each time the handset is used. Due to the slow nature of the dV/dt technique several enhancements have been made to reduce the time needed to reach full charge, and to reduce the incidence of overcharging:
1. Charging is terminated when the rate of change of battery voltage is less than, say, +2mV per minute for at least 5 consecutive minutes. This terminates charging 10 to 15 minutes earlier than the normal dV/dt technique (which requires a reduction in battery voltage), but still maintains full charging of the battery.
   For the first 5 minutes of charging a flat battery, the above is disabled, since for an over discharged battery, the voltage may rise sharply then fall when first placed on charge.
2. An up/down count is maintained by the microprocessor 6. The count is set to zero when the handset is fully charged and is incremented by 1 for every 2 minutes the handset spends in a call (i.e. discharging the battery). The count is decremented by 1 for every minute the handset is out of a call and on the charger, fast charging. If the count reaches zero, fast charging is terminated irrespective of the battery voltage change.

As an example of this technique, consider a handset that has a fully charged battery and is on its charger. The handset is removed and a 5 minute call is made. The handset is then placed back on the charger. If the dV/dt technique were used alone, fast charging would terminate after about 12 minutes. Using the modified technique, fast charging will terminate after only 3 minutes.

Typically, the ratio of fast charge to discharge is approximately 3:1. The efficiency during fast charge is about 100% (that is, 100 mA for 1 hour will provide about 100mAH of capacity increase in a battery which is not fully charged). Therefore the basic technique would overcharge by about 7 fold that required (approximately 16% of the battery's capacity). The modified technique overcharges by about 2:1. Through the day the unmodified technique will overcharge the battery by a total of about 300% of the battery's capacity. The modified technique overcharges by about 40%. This latter amount of overcharge is required to allow for variation in the battery discharge current (the handsets supply current) and the chargers fast charge current.

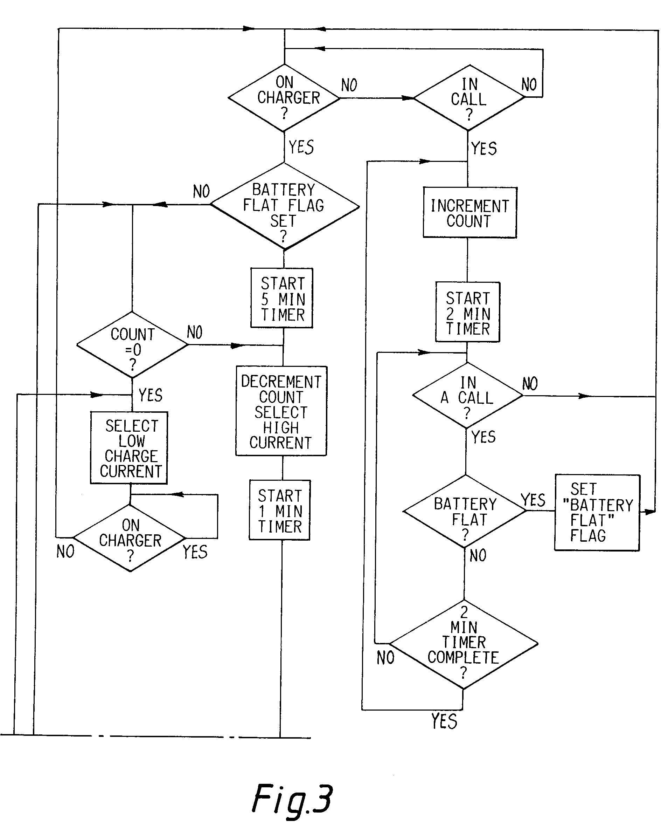

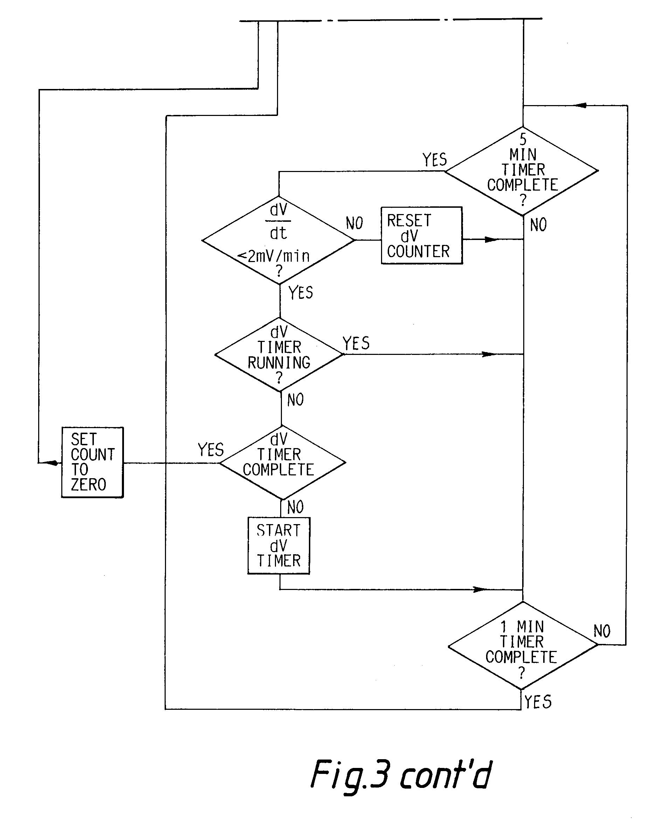

By way of example, an algorithm used for controlling the microprocessor 6 for the purpose of charging control and incorporating the enhancements described above is shown in Figure 3. The drawing is self-explanatory and will not be described in detail; needless to say, the specific numbers given are examples only.

## Claims

1. An electronic system comprising portable equipment incorporating electronic circuits powered by a rechargeable battery or battery pack, said equipment having current supply means incorporating terminals whereby the battery or battery pack may be charged from an external battery charger, and wherein said electronic circuits incorporate means for controlling the current supplied by the charger.

2. An electronic system as claimed in claim 1 wherein said current control means comprises a microprocessor forming part of said electronic circuits, and wherein said microprocessor further carries out the existing functions of said portable equipment.

3. An electronic system as claimed in either one of claims 1 or 2 wherein the current means incorporates means for monitoring the charging voltage applied to said battery or battery pack during charging, and for generating, on a control output, a control signal indicative of the charging voltage.

4. An electronic system as claimed in claim 3 wherein said control signal is indicative of the rate of charge of the charging voltage with time.

5. An electronic system as claimed in either one of claims 3 or 4 further comprising a charger control device connected in series or parallel with said current supply means, for controlling the current supplied by the charger in dependence upon said control signal.

6. An electronic system as claimed in claim 5 wherein said charger control device comprises a controllable current source placed in series with said current supply means, and wherein connection means are provided for connecting the control output of said controlling means to a control input of said current source.

7. An electronic system as claimed in either one of claims 5 or 6 wherein said charger control device forms part of said portable equipment.

8. An electronic system as claimed in either one of claims 5 or 6 further comprising an external battery charger for charging said battery or battery pack, said charger incorporating said charger control device, and wherein three terminals are used to interconnect the portable equipment and the battery charger for charging purposes: first and second terminals for the forward and return current supplies, and a third terminal for said control signal.

9. An electronic system as claimed in any one of the preceding claims wherein said current control means is operable to switch the charge current from a high rate to a low rate when charging is judged to be complete.

10. An electronic system as claimed in any one of claims 1 to 8 wherein said current control means is operable to switch the charging current off when charging is judged to be complete.
